# EUROPÄISCHE PATENTSCHRIFT

(11) **EP 4 162 302 B1**
(45) Veröffentlichungstag und Bekanntmachung des Hinweises auf die Patenterteilung: **23.07.2025**
(21) Anmeldenummer: 21709647.8
(22) Anmeldetag: 02.03.2021
(51) Int. Cl.: G01V 3/12

(54) **SYSTEM ZUM DETEKTIEREN VON EIGENSCHAFTEN EINER MATERIALSCHICHT**
SYSTEM FOR DETECTING PROPERTIES OF A MATERIAL LAYER
SYSTÈME POUR DÉTECTER DES PROPRIÉTÉS D'UNE COUCHE DE MATÉRIAU

(30) Priorität: 04.06.2020 DE 102020114874
(43) Veröffentlichungstag der Anmeldung: 12.04.2023
(73) Patentinhaber: Huesker Synthetic GmbH, 48712 Gescher (DE)
(72) Erfinder: HANGEN, Hartmut, 48712 Gescher (DE); PINTZ, Heiko, 48527 Nordhorn (DE)
(74) Vertreter: Pelster Behrends Patentanwälte PartG mbB
(86) Internationale Anmeldenummer: PCT/EP2021/055091
(87) Internationale Veröffentlichungsnummer: WO 2021/244781

(56) Entgegenhaltungen:
- EP-B1- 2 085 794
- DE-U1- 29 521 991
- US-A1- 2018 356 559

## Beschreibung

Die Erfindung betrifft ein System zum Detektieren von Eigenschaften einer Materialschicht oder eines eingebetteten Bauteils eines Bauwerks oder dessen Unterbaus. Das System umfasst eine Detektionsschicht, welche elektromagnetische Strahlung reflektierende Reflexionsbereiche aufweist und dazu eingerichtet ist, in ein Bauwerk oder dessen Unterbau eingebettet zu werden, und eine Detektionseinrichtung, welche dazu eingerichtet ist, elektromagnetische Strahlung in Richtung der Detektionsschicht auszusenden und von den Reflexionsbereichen der Detektionsschicht reflektierte elektromagnetische Strahlung zu empfangen.

Ferner betrifft die Erfindung einen Unterbau für einen Verkehrsweg, mit einer Detektionsschicht, welche zwischen zwei Materialschichten des Unterbaus angeordnet ist und elektromagnetische Strahlung reflektierende Reflexionsbereiche aufweist.

Darüber hinaus umfasst die Erfindung ein Verfahren zum Detektieren von Eigenschaften einer Materialschicht oder eines eingebetteten Bauteils eines Bauwerks oder dessen Unterbaus. Bei dem Verfahren wird mittels einer Detektionseinrichtung elektromagnetische Strahlung in Richtung einer Detektionsschicht, welche in ein Bauwerk oder dessen Unterbau eingebettet ist, ausgesendet und die von der Detektionsschicht reflektierte elektromagnetische Strahlung mittels der Detektionseinrichtung empfangen.

Bei der Neuherstellung oder Sanierung von Bauwerken oder Bauwerkunterbauten sind regelmäßig Materialschichten mit einer vorgegebenen Schichtdicke oder anderen vorgegebenen Eigenschaften zu erzeugen. Ferner besteht regelmäßig die Notwendigkeit, Bauteile, wie etwa Rohre oder Grundplatten, in einer vorgegebenen Position und/oder mit einer vorgegebenen Ausrichtung in einen Unterbau zu integrieren.

Insbesondere bei Verkehrswegunterbauten, also beispielsweise Unterbauten von Straßen oder Gleisen, ist die Anordnung von unterschiedlichen Materialschichten erforderlich. Die Materialschichten werden üblicherweise übereinander angeordnet und dienen beispielsweise der Umsetzung einer geeigneten Lastverteilung oder einer Drainagefunktion. Weitere Materialschichten können beispielsweise zur Erhöhung der Frostsicherheit oder zum Verhindern eines Feuchtigkeitsaufstiegs angelegt werden.

Auch im Deich- und Deponiebau werden regelmäßig Materialschichten mit einer definierten Schichtdicke oder einer Mindestschichtdicke vorgesehen, beispielsweise, um ein in den Boden eingebrachtes Dichtungssystem vor äußerer Beschädigung zu schützen.

Die Schichtdicke und der Schichtverlauf von unterirdischen Materialschichten sowie die Position und Ausrichtung von eingebetteten Bauteilen ist in einer Vielzahl von Anwendungsbereichen aus unterschiedlichen Gründen möglichst präzise einzuhalten. Eine vorgegebene Schichtdicke soll häufig aus Kostengründen möglichst exakt eingehalten werden, damit die anfallenden Materialkosten optimiert werden. Darüber hinaus können bei der Einhaltung von Schichtdicken Sicherheitsaspekte eine Rolle spielen. In verschiedenen Anwendungsbereichen ist eine Mindestschichtdicke zur Umsetzung einer Schichtfunktion erforderlich. Die Kenntnis der Schichtdicke kann auch zum Zwecke der Massenermittlung genutzt werden und somit als Grundlage für bauvertraglich relevante Soll-Ist Vergleiche dienen.

Die Eigenschaften von Materialschichten bzw. eingebetteten Bauteilen sind dabei sowohl während als auch nach der Herstellung eines Bauwerks oder dessen Unterbaus zu überwachen. In vielen Bereichen ist es erforderlich, den Verlauf einer Materialschicht, die Schichtdicke und/oder die Position oder Lage eines eingebetteten Bauteils in regelmäßigen oder unregelmäßigen Abständen zu überprüfen. Eine entsprechende Überprüfung findet dabei üblicherweise im Rahmen von Kontrollmessungen statt.

Zur Vermeidung von Probebohrungen ist man teilweise dazu übergegangen, elektromagnetische Strahlung reflektierende Detektionsschichten in Bauwerkunterbauten einzubringen. Über das Aussenden von elektromagnetischer Strahlung in Richtung der Detektionsschicht und ein anschließendes Empfangen der durch die Detektionsschicht reflektierten elektromagnetischen Strahlung können Eigenschaften von Materialschichten und eingebetteten Bauteilen zerstörungsfrei ermittelt werden.

Aus der Druckschrift EP 2 085 794 B1 ist ein auf diesem Prinzip beruhendes Verfahren zur Grenzflächendetektion in Bodenschichten beschrieben. Bei dem beschriebenen Verfahren werden zur Reflexion der ausgesendeten elektromagnetischen Strahlung Aluminiumstreifen eingesetzt.

Weitere Detektionssysteme sind beispielsweise aus den Druckschriften DE 295 21 991 U1 und US 2018/356559 A1 bekannt.

Die Praxis hat jedoch gezeigt, dass in ein Bauwerk oder dessen Unterbau eingebettete Aluminiumstreifen einem hohen Beschädigungsrisiko unterworfen sind und nicht sonderlich alterungsbeständig sind. Die Verwendung von Aluminiumstreifen ist somit insbesondere in Anwendungsfällen, bei denen die Detektionsschicht einer mechanischen Belastung unterliegt, und in Anwendungsfällen, bei denen eine langjährige Überprüfung der Materialschichteigenschaften bzw. der Bauteileigenschaften erforderlich ist, nachteilig.

Die der Erfindung zugrundeliegende Aufgabe besteht somit darin, das berührungslose und zerstörungsfreie Detektieren von Eigenschaften einer Materialschicht oder eines eingebetteten Bauteils zu verbessern.

Die Aufgabe wird gelöst durch ein System der eingangs genannten Art, wobei in den Reflexionsbereichen der Detektionsschicht elektromagnetische Strahlung reflektierende Fasern angeordnet sind.

Die Erfindung macht sich die Erkenntnis zunutze, dass strahlungsreflektierende Fasern wesentlich robuster gegen mechanische Beanspruchung und gleichzeitig alterungsbeständiger als Metallstreifen oder Metallfolien sind. Die Beschädigungsanfälligkeit der Detektionsschicht wird somit erheblich reduziert. Ferner unterliegen strahlungsreflektierende Fasern bei entsprechender Auswahl des Faserrohstoffes lediglich einer äußerst geringen chemischen oder physikalischen Alterung, beispielsweise durch Verrottung oder Korrosion.

Das erfindungsgemäße System kann beispielsweise zum Ermitteln der Position oder des Verlaufs einer Materialschicht eines Bauwerks oder dessen Unterbaus eingesetzt werden. In diesem Fall wird die Materialschicht vorzugsweise zumindest einseitig von der Detektionsschicht begrenzt. Ferner kann das erfindungsgemäße System zum Ermitteln der Position und/oder des Verlaufs eines eingebetteten Bauteils eines Bauwerks oder dessen Unterbaus eingesetzt werden. In diesem Fall ist das eingebettete Bauteil zumindest abschnittsweise von der Detektionsschicht umgeben. Vorzugsweise liegt die Detektionsschicht in diesem Fall an dem eingebetteten Bauteil an. Das eingebettete Bauteil kann beispielsweise ein Rohr oder eine Grundplatte sein. Das Bauteil kann beispielsweise in Erdreich oder Beton eingebettet sein.

Im Sinne der Erfindung sind strahlungsreflektierende Fasern solche Fasern, welche nicht nur unwesentliche Reflexionseigenschaften für elektromagnetische Strahlung aufweisen. Vorzugsweise zeichnen sich die strahlungsreflektierenden Fasern durch einen Reflexionsgrad für elektromagnetische Strahlung mit einer Frequenz zwischen 200Mhz und 2,2GHz von zumindest 40%, insbesondere von zumindest 60%, besonders bevorzugt von zumindest 80% aus. Im Sinne der Erfindung kann eine strahlungsreflektierende Faser beispielsweise ein strahlungsreflektierender Faden oder ein Bestandteil eines strahlungsreflektierenden Fadens sein. Ferner können auch mehrere strahlungsreflektierende Fasern einen strahlungsreflektierenden Faden ausbilden. Außerdem können strahlungsreflektierende Fasern gemeinsam mit Fasern, welche nicht strahlungsreflektierend sind, einen strahlungsreflektierenden Faden ausbilden. Außerdem kann eine strahlungsreflektierende Faser beispielsweise ein strahlungsreflektierendes Band, ein strahlungsreflektierender Strip oder ein strahlungsreflektierendes Tape oder ein Bestandteil eines strahlungsreflektierenden Bandes, eines strahlungsreflektierenden Strips oder eines strahlungsreflektierenden Tapes sein.

Das erfindungsgemäße System kann ferner zur Dehnungsmessung eingesetzt werden. Hierzu wird die Veränderung des Abstandes, insbesondere des horizontalen Abstandes, zwischen Detektionsstreifen, welche strahlungsreflektierende Fasern umfassen, erfasst und ausgewertet. Ferner kann im Rahmen der Dehnungsmessung die Dehnung der strahlungsreflektierenden Fasern selbst erfasst werden. Hierzu kann eine Widerstandsmessung oder eine elektrische Zeitbereichsreflektometrie eingesetzt werden.

Das erfindungsgemäße System wird ferner dadurch vorteilhaft weitergebildet, dass in den Reflexionsbereichen Faserbündel mit einer Mehrzahl von elektromagnetische Strahlung reflektierenden Fasern angeordnet sind. Alternativ oder zusätzlich bilden die elektromagnetische Strahlung reflektierenden Fasern mehrere, voneinander beabstandete elektromagnetische Strahlung reflektierende Detektionsstreifen aus. Einzelne strahlungsreflektierende Fasern bilden also vorzugsweise ein Flächengebilde, wobei das Flächengebilde streifenförmig sein kann. Die Fasern eines Faserbündels oder eines Detektionsstreifens verlaufen vorzugsweise parallel zueinander. Ein Faserbündel oder ein Detektionsstreifen umfasst beispielsweise zwischen 2 und 20 Fasern oder zwischen 2 und 20 nebeneinander angeordnete Fasersegmente. Die Detektionsstreifen können gleichmäßig oder ungleichmäßig voneinander beabstandet sein. Ferner können die Detektionsstreifen oder die Faserbündel untereinander elektrisch leitfähig verbunden sein. Die Detektionssteifen oder Faserbündel können untereinander mit einem oder mehreren elektrisch leitfähigen Verbindungsfäden verbunden sein. Die Einbringung oder Aufbringung des einen oder der mehreren Verbindungsfäden kann beispielsweise über ein textiles Herstellungsverfahren erfolgen. Die Faserbündel oder Detektionsstreifen können auch miteinander verschweißt sein. Die Verbindung zwischen den Faserbündeln oder Detektionsstreifen kann auch über elektrisch leitfähigen Kunststoff hergestellt werden. Die Detektionsstreifen oder Faserbündel können mit einem metallischen Leitelement gefügt sein.

Die Detektionsschicht des Systems erstreckt sich vorzugsweise in Längsrichtung, wobei sich die Faserbündel oder Detektionsstreifen in Querrichtung, also quer zur Längsrichtung, erstrecken. Die Detektionsstreifen können Reflexionsbänder ausbilden. Die Fasern eines Faserbündels oder eines Detektionsstreifens können an ihren jeweiligen Enden mittels eines Verbindungselements elektrisch leitfähig miteinander verbunden sein. Das Verbindungselement kann beispielsweise eine Klemme, beispielsweise eine Metallklemme, sein. Die Detektionsstreifen können beispielsweise eine Breite von 10 bis 100 cm, beispielsweise eine Breite von 20 cm aufweisen. Die Länge der Detektionsstreifen entspricht vorzugsweise der Breite der Detektionsschicht. Die Breite der Detektionsschicht kann beispielsweise in einem Bereich zwischen 1m und 10m, vorzugsweise zwischen 3m und 8m, beispielsweise bei etwa 5m liegen.

In einer weiteren bevorzugten Ausführungsform des erfindungsgemäßen Systems ist die Detektionsschicht als Geotextil ausgebildet oder umfasst ein Geotextil. Die elektromagnetische Strahlung reflektierenden Fasern sind an dem Geotextil fixiert und/oder in das Geotextil integriert. Die strahlungsreflektierenden Fasern oder andere Fasern des Geotextils können geglättet oder geschlichtet sein. Die strahlungsreflektierenden Fasern oder andere Fasern des Geotextils können auch einfach oder mehrfach beschichtet sein. Die strahlungsreflektierenden Fasern und/oder das Geotextil sind vorzugsweise dehnbar. Die Dehnbarkeit der strahlungsreflektierenden Fasern und/oder des Geotextils wird vorzugsweise über eine elastische und/oder plastische Verformbarkeit umgesetzt. Die Dehnbarkeit erlaubt eine Dehnungsmessung bis hin zur Bruchdehnung des Geotextils oder der Fasern des Geotextils.

In einer Weiterbildung des erfindungsgemäßen Systems ist das Geotextil als Gewebe, Gewirke oder Vliesstoff ausgebildet. Das Geotextil kann auch ein Vliesstoff sein, welcher ausschließlich aus strahlungsreflektierenden Fasern ausgebildet ist. Ferner kann das Geotextil eine Vliesschicht umfassen, welche ausschließlich strahlungsreflektierende Fasern umfasst. Zur Herstellung entsprechender Vliesschichten können beispielsweise Faserreste aus anderen Herstellungsprozessen verwendet werden. In diesem Fall können Faserreste aus anderen Herstellungsprozessen weiterverwendet werden, sodass eine Entsorgung vermieden wird. Die strahlungsreflektierenden Fasern können als Schussfäden und/oder als Kettfäden in das Geotextil eingebracht sein.

In einer weiteren bevorzugten Ausführungsform des erfindungsgemäßen Systems sind die strahlungsreflektierenden Fasern auf einer Oberfläche des Geotextils fixiert. Beispielsweise sind die strahlungsreflektierenden Fasern auf die Oberfläche des Geotextils aufgedampft, aufgeklebt oder aufgeraschelt. Vorzugsweise sind die strahlungsreflektierenden Fasern nachträglich auf das Geotextil aufgebracht worden.

Das erfindungsgemäße System wird ferner dadurch vorteilhaft weitergebildet, dass die strahlungsreflektierenden Fasern durch Weben, Wirken, Rascheln, Nähen oder Sticken in das Geotextil eingearbeitet sind. Vorzugsweise sind die strahlungsreflektierenden Fasern in das Geotextil eingewebt, aufgenäht und/oder aufgestickt. Die strahlungsreflektierenden Fasern können als Kettfäden oder Schussfäden in das Geotextil eingearbeitet sein.

In einer weiteren bevorzugten Ausführungsform des erfindungsgemäßen Verfahrens ist die Detektionsschicht aus einem Faserverbundwerkstoff ausgebildet oder umfasst einen Faserverbundwerkstoff. Die strahlungsreflektierenden Fasern sind vorzugsweise auf dem Faserverbundwerkstoff fixiert und/oder in den Faserverbundwerkstoff integriert. Der Faserverbundwerkstoff kann neben den strahlungsreflektierenden Fasern weitere Fasern, beispielsweise Glasfasern oder Aramidfasern, umfassen. Die Matrix des Faserverbundwerkstoffs ist vorzugsweise aus einem oder mehreren Kunststoffpolymeren ausgebildet, beispielsweise aus einem Duroplast, einem Elastomer und/oder einem Thermoplast.

In einer weiteren Ausführungsform des erfindungsgemäßen Systems sind die elektromagnetische Strahlung reflektierenden Fasern als Kohlenstofffasern ausgebildet. Die Kohlenstofffasern können auch als Karbonfasern bezeichnet werden. Die Faserbündel oder Detektionsstreifen umfassen jeweils vorzugsweise 20 bis 100 Gramm, insbesondere 50 bis 70 Gramm, beispielsweise etwa 60 Gramm strahlungsreflektierende Fasern pro Meter. Die Faserbündel oder Detektionsstreifen weisen vorzugsweise jeweils eine Gesamtfadenstärke zwischen 400.000 und 700.000 dtex, beispielsweise eine Gesamtfadenstärke von etwa 580.000 dtex auf.

Die strahlungsreflektierenden Fasern können alternativ auch Metallfasern sein. Insbesondere sind die strahlungsreflektierenden Fasern Stahlfasern, etwa Edelstahlfasern. Ferner können Metalldrähte oder dünne elastische Metallstäbe als strahlungsreflektierende Fasern eingesetzt werden.

Alternativ oder zusätzlich zu den strahlungsreflektierenden Fasern kann die Detektionsschicht auch aufgedampfte Kohlenstoffpartikel umfassen, über welche die von der Detektionseinrichtung ausgesendete elektromagnetische Strahlung reflektiert werden kann.

In einer weiteren bevorzugten Ausführungsform des erfindungsgemäßen Systems ist die Detektionsschicht als Bewehrungsgitter ausgebildet oder in ein Bewehrungsgitter integriert. Das Bewehrungsgitter umfasst vorzugsweise synthetische Fasern, beispielsweise aus Polyester, Polyethylenterephthalat (PET), Polypropylen (PP), Polyvinylalkohol (PVA) und/oder einem Aramid. Insbesondere ist die Detektionsschicht Bestandteil einer Asphaltbewehrung. Alternativ ist die Detektionsschicht Bestandteile einer Bodenbewehrung.

In einer anderen bevorzugten Ausführungsform des erfindungsgemäßen Systems umfasst die Detektionseinrichtung eine Auswerteeinheit, welche dazu eingerichtet ist, durch Auswertung der ausgesendeten und empfangenen elektromagnetischen Strahlung den Verlauf, die Dicke oder eine erfolgte Dehnung einer Materialschicht oder eines eingebetteten Bauteils des Bauwerks oder dessen Unterbaus zu ermitteln. Hierzu ermittelt die Auswerteeinheit vorzugsweise die Position, den Verlauf oder eine erfolgte Dehnung der Detektionsschicht des Systems. Insbesondere ist die Auswerteeinheit dazu eingerichtet, eine Laufzeitmessung anhand der ausgesendeten und empfangenen elektromagnetischen Strahlung durchzuführen, über welche der Abstand zwischen der Detektionseinrichtung und der Detektionsschicht ermittelt werden kann.

Die Detektionseinrichtung kann eine Sendeeinheit zum Aussenden der elektromagnetischen Strahlung und eine Empfangseinheit zu Empfangen der reflektierten elektromagnetischen Strahlung umfassen. Die Detektionseinrichtung kann dazu eingerichtet sein, Radarwellen auszusenden und reflektierte Radarwellen zu empfangen. Die Reflexionsbereiche der Detektionsschicht sind vorzugsweise radarreflektiv. Alternativ können die von der Detektionseinrichtung ausgesendeten und empfangenen Wellen eine Frequenz zwischen 200Mhz und 2,2GHz aufweisen.

Die der Erfindung zugrundeliegende Aufgabe wird ferner durch einen Unterbau der eingangs genannten Art gelöst, wobei in den Reflexionsbereichen der Detektionsschicht elektromagnetische Strahlung reflektierende Fasern angeordnet sind.

Der Unterbau kann beispielsweise der Unterbau einer Straße oder eines Bahngleises sein. Die Detektionsschicht des Unterbaus kann eine oder mehrere in Bezug auf die Detektionsschicht des Systems beschriebene Merkmale aufweisen.

Die Detektionsschicht kann auch in Verbindung mit einem Bauwerk eingesetzt werden. In diesem Fall ist die Detektionsschicht beispielsweise zwischen zwei Materialschichten des Bauwerks angeordnet oder auf ein Bauteil des Bauwerks aufgelegt. Auch in diesem Fall kann die Detektionsschicht strahlungsreflektierende Reflexionsbereiche mit strahlungsreflektierenden Fasern aufweisen.

Die der Erfindung zugrundeliegende Aufgabe wird ferner durch ein Verfahren der eingangs genannten Art gelöst, wobei die von der Detektionseinrichtung ausgesendete elektromagnetische Strahlung im Rahmen des erfindungsgemäßen Verfahrens von elektromagnetische Strahlung reflektierenden Fasern, welche in Reflexionsbereichen der Detektionsschicht angeordnet sind, reflektiert wird. Das Verfahren wird vorzugsweise mit einem System nach einem der vorstehend beschriebenen Ausführungsformen ausgeführt. Hinsichtlich der Vorteile und Modifikationen des erfindungsgemäßen Verfahren wird somit zunächst auf die Vorteile und Modifikationen des erfindungsgemäßen Systems verweisen.

Die von Detektionseinrichtung ausgesendete elektromagnetische Strahlung umfasst vorzugsweise Radarwellen. Die Reflexionsbereiche der Detektionsschicht sind vorzugsweise radarreflektiv. Die ausgesendete elektromagnetische Strahlung kann einen linear polarisierten Wellenanteil aufweisen. Die Polarisationsebene dieses linear polarisierten Wellenanteils kann so ausgerichtet sein, dass die Haupterstreckungsrichtung jedes Reflexionsbereichs parallel zu der Ebene liegt, in welcher die E-Welle des linear polarisierten Wellenanteils schwingt. Die Polarisationsebene des linear polarisierten Wellenanteils kann ferner so ausgerichtet sein, dass sich die H-Welle der elektromagnetischen Strahlung in einer sich in vertikaler Richtung erstreckenden Ebene ausbreitet, in welcher auch die Haupterstreckungsrichtung der Detektionsschicht liegt.

Vorzugsweise wird die Detektionseinrichtung während des Aussendens und Empfangens der elektromagnetischen Strahlung bewegt. Vorzugsweise ist die Detektionseinrichtung an einem Prüffahrzeug befestigt, welches sich entlang einer Haupterstreckungsrichtung der Detektionsschicht bewegt. Das Prüffahrzeug kann ein Schienenfahrzeug sein. Die Detektionseinrichtung kann elektromagnetische Strahlung senkrecht nach unten, schräg nach vorne und/oder schräg nach hinten aussenden. Ferner kann die Detektionseinrichtung senkrecht von unten kommende, schräg von vorne und/oder schräg von hinten kommende elektromagnetische Strahlung empfangen.

Das erfindungsgemäße Verfahren wird ferner dadurch vorteilhaft weitergebildet, dass mittels Auswerten der ausgesendeten und empfangenen elektromagnetischen Strahlung durch eine Auswerteeinheit der Detektionseinrichtung der Verlauf und/oder die Position einer Materialschicht oder eines eingebetteten Bauteils des Bauwerks oder dessen Unterbaus ermittelt wird. Hierzu wird vorzugsweise der Verlauf und/oder die Position der Detektionsschicht ermittelt. Alternativ oder zusätzlich kann die Dicke einer Materialschicht oder eines eingebetteten Bauteils des Bauwerks oder dessen Unterbaus mittels Auswerten der ausgesendeten und empfangenen elektromagnetischen Strahlung durch eine Auswerteeinheit der Detektionseinrichtung ermittelt werden. Alternativ oder zusätzlich kann die Dehnung einer Materialschicht oder eines eingebetteten Bauteils des Bauwerks oder dessen Unterbaus mittels Auswerten der ausgesendeten und empfangenen elektromagnetischen Strahlung durch eine Auswerteeinheit der Detektionseinrichtung ermittelt werden.

Nachfolgend werden bevorzugte Ausführungsformen der Erfindung unter Bezugnahme auf die beiliegenden Zeichnungen näher erläutert und beschrieben. Dabei zeigen:
- Fig. 1: ein Ausführungsbeispiel des erfindungsgemäßen Systems in einer perspektivischen Darstellung;
- Fig. 2: die Ermittlung eines Schichtverlaufs mittels des erfindungsgemäßen Verfahrens in einer schematischen Darstellung;
- Fig. 3: die Ermittlung einer Bauteilposition mittels des erfindungsgemäßen Verfahrens in einer schematischen Darstellung;
- Fig. 4: die Ermittlung einer Bauteilposition mittels des erfindungsgemäßen Verfahrens in einer schematischen Darstellung;
- Fig. 5: eine Detektionsschicht eines erfindungsgemäßen Systems in einer schematischen Darstellung;
- Fig. 6: eine weitere Detektionsschicht eines erfindungsgemäßen Systems in einer schematischen Darstellung;
- Fig. 7: eine weitere Detektionsschicht eines erfindungsgemäßen Systems in einer schematischen Darstellung;
- Fig. 8: eine weitere Detektionsschicht eines erfindungsgemäßen Systems in einer schematischen Darstellung;
- Fig. 9: eine weitere Detektionsschicht eines erfindungsgemäßen Systems in einer schematischen Darstellung;
- Fig. 10: eine weitere Detektionsschicht eines erfindungsgemäßen Systems in einer schematischen Darstellung; und

- Fig. 11: eine weitere Detektionsschicht eines erfindungsgemäßen Systems in einer schematischen Darstellung.

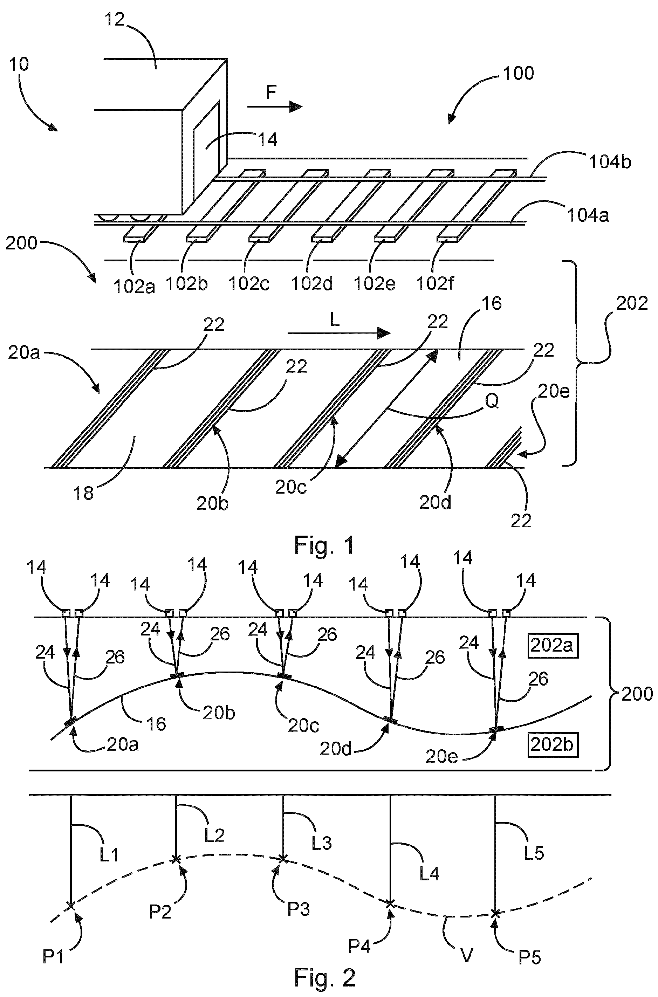

Die Fig. 1 zeigt ein als Bahngleis ausgebildetes Bauwerk 100, welches in Längsrichtung L beabstandete Schwellen 102a-102f aufweist. Die Schwellen 102a-102f erstrecken sich in Querrichtung Q, also quer zur Längsrichtung L. Auf den Schwellen 102a-102f verlaufen zwei parallele Schienen 104a, 104b.

Unterhalb des Gleises 100 befindet sich ein Unterbau 200 mit zumindest einer Materialschicht 202. Unterhalb der Materialschicht 202 befindet sich eine bei der Herstellung des Unterbaus 200 eingebrachte Detektionsschicht 16. Über die in den Unterbau 200 eingebrachte Detektionsschicht 16 lässt sich die Schichtdicke der Materialschicht 202 zerstörungsfrei und berührungslos ermitteln.

Hierzu wird ein System 10 eingesetzt, welches neben der Detektionsschicht 16 ein Prüffahrzeug 12 umfasst. Das Prüffahrzeug 12 ist ein Schienenfahrzeug, welches sich entlang der Schienen 104a, 104b in Fahrtrichtung F bewegt. Das Prüffahrzeug 12 kann einen eigenen Antrieb aufweisen oder von einem Drittfahrzeug bewegt werden.

Die Detektionseinrichtung 14 ist dazu eingerichtet, elektromagnetische Strahlung 24 in Richtung der Detektionsschicht 16 auszusenden und die von der Detektionsschicht 16 reflektierte elektromagnetische Strahlung 26 zu empfangen. Zur Strahlungsreflexion umfasst die Detektionsschicht 16 mehrere Reflexionsbereiche 20a-20e, wobei die Reflexionsbereiche 20a-20e elektromagnetische Strahlung 24 reflektierende Fasern 22 umfassen. Die Fasern 22 sind vorliegend Kohlenstofffasern bzw. Karbonfasern.

In den Reflexionsbereichen 20a-20e sind jeweils Faserbündel mit einer Mehrzahl von strahlungsreflektierenden Fasern 22 angeordnet, wobei die Fasern 22 voneinander beabstandete elektromagnetische Strahlung 24 reflektierende Detektionsstreifen ausbilden. Die Detektionsschicht 16 umfasst ein Geotextil 18, wobei die strahlungsreflektierenden Fasern 22 in das Geotextil 18 integriert sind.

Die Fig. 2 zeigt das Ermitteln eines Verlaufs V einer Grenzschicht zwischen zwei Materialschichten 202a, 202b. Hierzu ist zwischen den zwei Materialschichten 202a, 202b während der Herstellung des Unterbaus 200 eine Detektionsschicht 16 eingebracht worden. Über den Verlauf der Detektionsschicht 16 kann der Verlauf V der Grenzschicht zwischen den zwei Materialschichten 202a, 202b bestimmt werden.

Die Detektionsschicht 16 weist elektromagnetische Strahlung 24 reflektierende Reflexionsbereiche 20a-20e auf. Eine Detektionseinrichtung 14 wird beabstandet von der Detektionsschicht 16 oberhalb des Unterbaus 200 entlang der Haupterstreckungsrichtung der Detektionsschicht 16 bewegt. Während dieser Bewegung sendet die Detektionseinrichtung 14 Radarwellen umfassende elektromagnetische Strahlung 24 in Richtung der Detektionsschicht 16 aus. Zumindest ein Teil der ausgesendeten elektromagnetischen Strahlung 24 wird durch die Reflexionsbereiche 20a-20e der Detektionsschicht 16 reflektiert, sodass die Detektionseinrichtung 14 die reflektierte elektromagnetische Strahlung 26 wieder empfangen kann.

Auf Grundlage der bekannten Ausbreitungsgeschwindigkeit der ausgesendeten elektromagnetischen Strahlung 24 können Laufzeitmessungen L1-L5 durchgeführt werden, um den Abstand zwischen der Detektionsschicht 16 und der Detektionseinrichtung 14 an mehreren Messpunkten P1-P5 ermitteln zu können. Über die Messpunkte P1-P5 kann der Verlauf V der Detektionsschicht 16 und somit der Verlauf der Grenzschicht zwischen den Materialschichten 202a, 202b bestimmt werden. Die Präzision der Verlaufsbestimmung kann dabei über die Anzahl der Messpunkte verbessert werden.

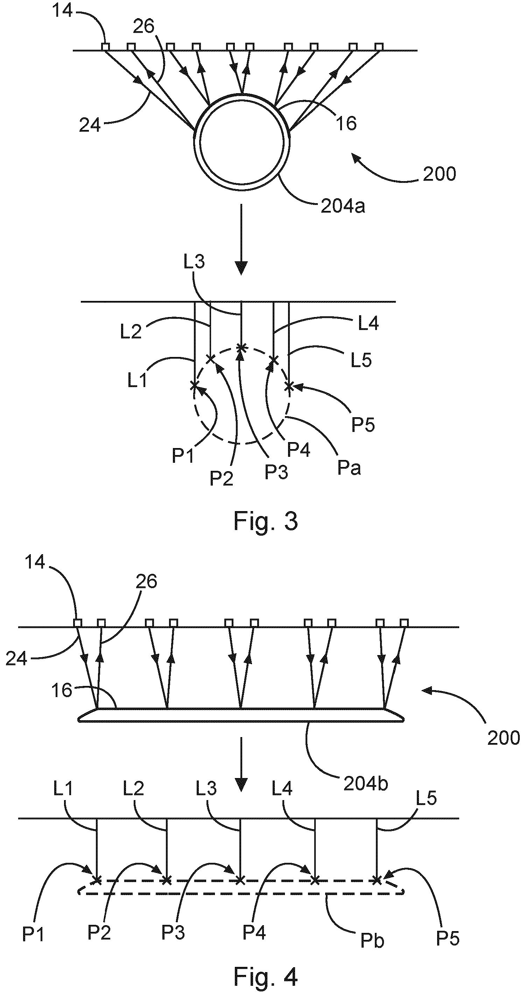

Die Fig. 3 zeigt schematisch die Detektion einer Bauteilposition Pa eines Bauteils 204a. Das Bauteil 204a ist ein Rohrsegment, welches Bestandteil eines Unterbaus 200 ist. Das Bauteil 204a ist in eine Materialschicht eingebettet. Auf der Oberseite des Bauteils 204a befindet sich eine Detektionsschicht 16, welche elektromagnetische Strahlung 24 reflektierende Fasern 22 umfasst.

Zur Positionsbestimmung wird eine Detektionseinrichtung 14 quer zur Längsachse des Bauteils 204a bewegt. Während der Bewegung sendet die Detektionseinrichtung 14 elektromagnetische Wellen 24 aus und empfängt die von der Detektionsschicht 16 reflektierte elektromagnetische Strahlung 26.

Über mehrere Laufzeitmessungen L1-L5, welche von einer Auswerteeinheit vorgenommen werden, können über eine Abstandsermittlung unter Berücksichtigung der Ausbreitungsgeschwindigkeit der elektromagnetischen Strahlung 24, 26 die Messpunkte P1-P5 ermittelt werden. Über die Messpunkte P1-P5 kann dann die Bauteilposition Pa bestimmt werden.

Die Detektionseinrichtung 14 kann dazu eingerichtet sein, elektromagnetische Strahlung 24 schräg nach vorne, senkrecht nach unten und schräg nach hinten auszusenden und aus diesen Richtungen zu empfangen. Wie die Fig. 3 zeigt, ist dies insbesondere bei gekrümmten Bauteilgeometrien vorteilhaft.

Die Fig. 4 zeigt eine Positionsdetektion für ein Bauteil 204b, wobei das Bauteil 204b eine eingebettete Grundplatte ist. Das Bauteil 204b ist folglich ebenfalls Bestandteile eines Unterbaus 200.

Auf der Oberseite des Bauteils 204b befindet sich erneut eine Detektionsschicht 16, welche elektromagnetische Strahlung 24 reflektierende Fasern 22 umfasst. Durch das Aussenden von elektromagnetischer Strahlung 24 mittels einer Detektionseinrichtung 14 in Richtung der Detektionsschicht 16 und ein anschließendes Empfangen der reflektierten elektromagnetischen Strahlung 26 kann über eine Laufzeitauswertung der Abstand des Bauteils 204b von dem Bewegungspfad der Detektionseinrichtung 14 an mehreren Messpunkten P1-P5 bestimmt werden. Über die Messpunkte P1-P5 kann erneut die Bauteilposition Pb bestimmt werden.

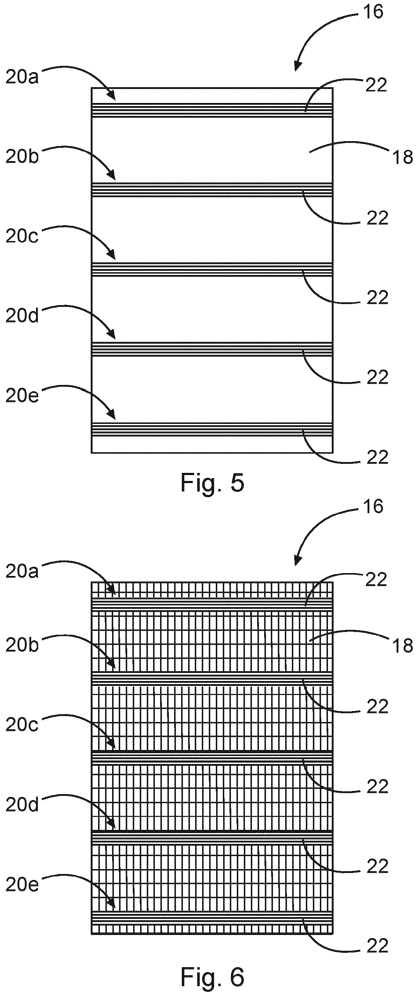

Die Fig. 5 zeigt eine Detektionsschicht 16 mit mehreren Reflexionsbereichen 20a-20e. Die Reflexionsbereiche 20a-20e werden durch Faserbündel aus Kohlenstofffasern 22 gebildet.

Die Detektionsschicht 16 umfasst ein als Vlies ausgebildetes Geotextil 18, wobei die Faserbündel aus den Kohlenstofffasern 22 an dem Geotextil 18 fixiert sind. Die Fasern 22 können beispielsweise auf die Oberfläche des Geotextils 18 aufgedampft, aufgeklebt oder aufgeraschelt sein.

Die Fig. 6 zeigt eine Detektionsschicht, deren Geotextil 18 als Gewebe ausgebildet ist. In das Gewebe sind Kohlenstofffasern 22 eingearbeitet. Die Kohlenstofffasern 22 können beispielsweise in das Geotextil 18 eingewebt, eingenäht oder eingestickt sein.

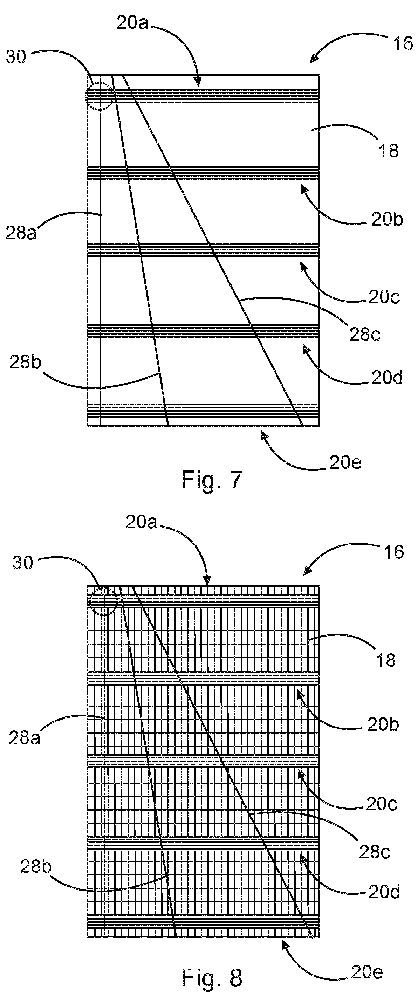

Die Fig. 7 und 8 zeigen, dass die Detektionsstreifen aus Kohlenstofffasern 22 über Verbindungsfäden 28a-28c elektrisch leitfähig miteinander verbunden sein können. Über die elektrisch leitfähige Verbindung werden die Reflexionseigenschaften der Detektionsschicht 16 verbessert. Die Darstellungen zeigen beispielhaft einen Fügebereiche 30, in welcher der Verbindungsfaden 28a elektrisch leitfähig mit dem Reflexionsbereich 20a verbunden ist. Die Verbindungsfäden 28a-28c können mittels eines textilen Herstellungsverfahrens auf das Geotextil 18 aufgebracht oder in das Geotextil 18 eingebracht sein.

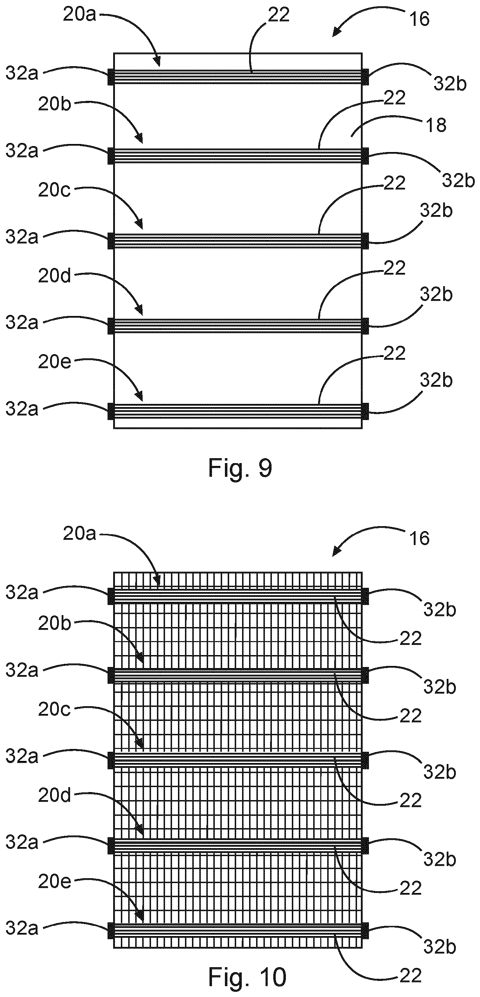

Die Fig. 9 und 10 zeigen Detektionsschichten 16, bei welchen die Kohlenstofffasern 22 eines Faserbündels an ihren jeweiligen Enden mittels eines Verbindungselements 32a, 32b elektrisch leitfähig miteinander verbunden sind. Die Verbindungselemente 32a, 32b sind vorliegend Klemmen aus einem elektrisch leitfähigen Material. Alternativ zu den dargestellten Klemmen können auch andere Verbindungselemente 32a, 32b eingesetzt werden, über welche eine elektrisch leitfähige stoffschlüssige, kraftschlüssige und/oder formschlüssige Verbindung zwischen den Kohlenstofffasern 22 eines Faserbündels umgesetzt wird.

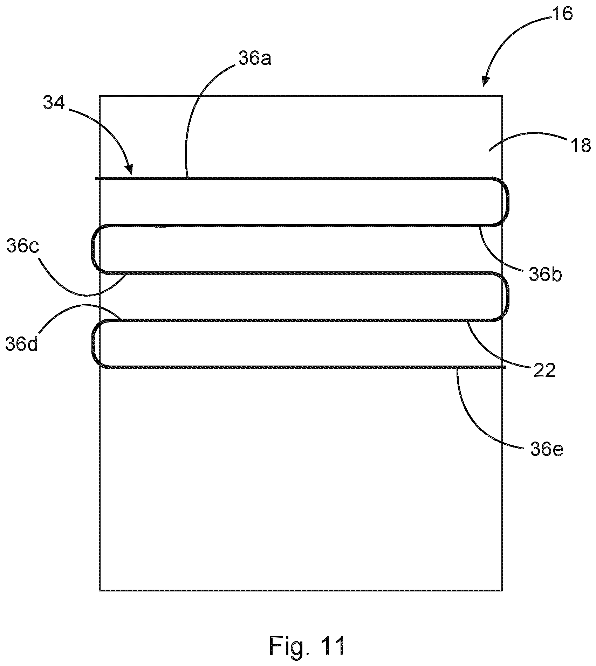

Die Fig. 11 zeigt eine Detektionsschicht 16, bei welcher ein Kohlenstofffasern 22 umfassender Faden 34 als Schussfaden in ein als Gewebe ausgebildetes Geotextil 18 eingearbeitet ist. Der Faden 34 kann entweder ein reiner Kohlenstofffaden sein oder neben den Kohlenstofffasern 22 noch weitere andere Fasern umfassen. Der Faden 34 umfasst mehrere geradlinige Fadensegmente 36a-36e und mehrere gebogene Fadensegmente, über welche die geradlinigen Fadensegmente 36a-36e miteinander verbunden sind. Die geradlinigen Fadensegmente 36a-36e sind äquidistant beabstandet voneinander und verlaufen parallel zueinander.

Alternativ könnte auch ein Kohlenstofffasern 22 umfassender Faden 34 als Kettfaden in ein als Gewebe ausgebildetes Geotextil 18 einer Detektionsschicht 16 eingearbeitet sein.

Alternativ oder zusätzlich zu den dargestellten Kohlenstofffäden 22 können die Reflexionsbereiche 20a-20e einer Detektionsschicht 16 auch Metallfäden umfassen. Die Detektionsschicht 16 kann als Bewehrungsgitter ausgebildet oder in ein Bewehrungsgitter integriert sein.

### Bezugszeichen

- 10: System
- 12: Prüffahrzeug
- 14: Detektionseinrichtung
- 16: Detektionsschicht
- 18: Geotextil
- 20a-20e: Reflexionsbereiche
- 22: Fasern
- 24: Strahlung
- 26: Strahlung
- 28a-28c: Verbindungsfäden
- 30: Fügebereich
- 32a, 32b: Verbindungselemente
- 34: Faden
- 36a-36e: Fadensegmente

- 100: Bauwerk
- 102a-102f: Schwellen
- 104a, 104b: Schienen

- 200: Unterbau
- 202, 202a, 202b: Materialschichten
- 204a, 204b: Bauteil

- F: Fahrtrichtung
- L: Längsrichtung
- L1-L5: Laufzeitmessungen
- Q: Querrichtung
- P1-P5: Messpunkte
- Pa, Pb: Bauteilpositionen
- V: Verlauf

## Patentansprüche

1. System (10) zum Detektieren von Eigenschaften einer Materialschicht (202, 202a, 202b) oder eines eingebetteten Bauteils (204a, 204b) eines Bauwerks (100) oder dessen Unterbaus (200); mit
- einer Detektionsschicht (16), welche elektromagnetische Strahlung (24) reflektierende Reflexionsbereiche (20a-20e) aufweist und dazu eingerichtet ist, in ein Bauwerk (100) oder dessen Unterbau (200) eingebettet zu werden; und
- einer Detektionseinrichtung (14), welche dazu eingerichtet ist, elektromagnetische Strahlung (24) in Richtung der Detektionsschicht (16) auszusenden und von den Reflexionsbereichen (20a-20e) der Detektionsschicht (16) reflektierte elektromagnetische Strahlung (26) zu empfangen;
**dadurch gekennzeichnet, dass** in den Reflexionsbereichen (20a-20e) der Detektionsschicht (16) elektromagnetische Strahlung (24) reflektierende Fasern (22) angeordnet sind.

2. System (10) nach Anspruch 1,
**dadurch gekennzeichnet, dass** in den Reflexionsbereichen (20a-20e) Faserbündel mit einer Mehrzahl von elektromagnetische Strahlung (24) reflektierenden Fasern (22) angeordnet sind und/oder die elektromagnetische Strahlung (24) reflektierenden Fasern (22) mehrere voneinander beabstandete elektromagnetische Strahlung (24) reflektierende Detektionsstreifen ausbilden.

3. System (10) nach Anspruch 1 oder 2,
**dadurch gekennzeichnet, dass** die Detektionsschicht (16) als Geotextil (18) ausgebildet ist oder ein Geotextil (18) umfasst, wobei die elektromagnetische Strahlung (24) reflektierenden Fasern (22) an dem Geotextil (18) fixiert und/oder in das Geotextil (18) integriert sind.

4. System (10) nach Anspruch 3,
**dadurch gekennzeichnet, dass** das Geotextil (18) als Gewebe, Gewirke oder Vliesstoff ausgebildet ist.

5. System (10) nach Anspruch 3 oder 4,
**dadurch gekennzeichnet, dass** die elektromagnetische Strahlung (24) reflektierenden Fasern (22) auf einer Oberfläche des Geotextils (18) fixiert sind.

6. System (10) nach einem der Ansprüche 3 bis 5,
**dadurch gekennzeichnet, dass** die elektromagnetische Strahlung (24) reflektierenden Fasern (22) durch Weben, Wirken, Rascheln, Nähen oder Sticken in das Geotextil (18) eingearbeitet sind.

7. System (10) nach einem der vorstehenden Ansprüche,
**dadurch gekennzeichnet, dass** die Detektionsschicht (16) aus einem Faserverbundwerkstoff ausgebildet ist oder einen Faserverbundwerkstoff umfasst, wobei die elektromagnetische Strahlung (24) reflektierenden Fasern (22) auf dem Faserverbundwerkstoff fixiert und/oder in den Faserverbundwerkstoff integriert sind.

8. System (10) nach einem der vorstehenden Ansprüche,
**dadurch gekennzeichnet, dass** die strahlungsreflektierenden Fasern (22) als Kohlenstofffasern ausgebildet sind.

9. System (10) nach einem der vorstehenden Ansprüche,
**dadurch gekennzeichnet, dass** die Detektionsschicht (16) als Bewehrungsgitter ausgebildet oder in ein Bewehrungsgitter integriert ist.

10. System (10) nach einem der vorstehenden Ansprüche,
**dadurch gekennzeichnet, dass** die Detektionseinrichtung (14) eine Auswerteeinheit umfasst, welche dazu eingerichtet ist, durch Auswertung der ausgesendeten und empfangenen elektromagnetischen Strahlung (24, 26) den Verlauf (V), die Dicke oder eine erfolgte Dehnung einer Materialschicht (202, 202a, 202b) oder eines Bauteils (204a, 204b) des Bauwerks (100) oder dessen Unterbaus (200) zu ermitteln.

11. Unterbau (200) für einen Verkehrsweg, mit
- einer Detektionsschicht (16), welche zwischen zwei Materialschichten (202, 202a, 202b) des Unterbaus (200) angeordnet ist und elektromagnetische Strahlung (24) reflektierende Reflexionsbereiche (20a-20e) aufweist;
**dadurch gekennzeichnet, dass** in den Reflexionsbereichen (20a-20e) der Detektionsschicht (16) elektromagnetische Strahlung (24) reflektierende Fasern (22) angeordnet sind.

12. Verfahren zum Detektieren von Eigenschaften einer Materialschicht (202, 202a, 202b) oder eines eingebetteten Bauteils (204a, 204b) eines Bauwerks (100) oder dessen Unterbaus (200), mittels eines Systems (10), insbesondere mittels eines Systems (10) nach einem der vorstehenden Ansprüche, mit den Schritten:
- Aussenden von elektromagnetischer Strahlung (24) in Richtung einer Detektionsschicht (16), welche in ein Bauwerk (100) oder dessen Unterbau (200) eingebettet ist, mittels einer Detektionseinrichtung (14) des Systems (10); und
- Empfangen der von der Detektionsschicht (16) reflektierten elektromagnetischen Strahlung (26) mittels der Detektionseinrichtung (14);
**dadurch gekennzeichnet, dass** die von der Detektionseinrichtung (14) ausgesendete elektromagnetische Strahlung (24) von elektromagnetische Strahlung (24) reflektierenden Fasern (22), welche in Reflexionsbereichen (20a-20e) der Detektionsschicht (16) angeordnet sind, reflektiert wird.

13. Verfahren nach Anspruch 12,
**gekennzeichnet durch** einen der folgenden Schritte:
- Ermitteln des Verlaufs (V) und/oder der Position (Pa, Pb) einer Materialschicht (202, 202a, 202b) oder eines eingebetteten Bauteils (204a, 204b) des Bauwerks (100) oder dessen Unterbaus (200) mittels Auswerten der ausgesendeten und empfangenen elektromagnetischen Strahlung (24, 26) durch eine Auswerteeinheit der Detektionseinrichtung (14);
- Ermitteln der Dicke einer Materialschicht (202, 202a, 202b) oder eines eingebetteten Bauteils (204a, 204b) des Bauwerks (100) oder dessen Unterbaus mittels Auswerten der ausgesendeten und empfangenen elektromagnetischen Strahlung (24, 26) durch eine Auswerteeinheit der Detektionseinrichtung (14);
- Ermitteln der Dehnung einer Materialschicht (202, 202a, 202b) oder eines eingebetteten Bauteils (204a, 204b) des Bauwerks (100) oder dessen Unterbaus (200) mittels Auswerten der ausgesendeten und empfangenen elektromagnetischen Strahlung (24, 26) durch eine Auswerteeinheit der Detektionseinrichtung (14).

## Claims

1. System (10) for detecting properties of a material layer (202, 202a, 202b) or an embedded component (204a, 204b) of a structure (100) or its substructure (200); with
- a detection layer (16), which has electromagnetic radiation (24) reflecting reflection areas (20a-20e) and is set up to be embedded in a structure (100) or its substructure (200); and
- a detection device (14), which is set up to emit electromagnetic radiation (24) in the direction of the detection layer (16) and to receive electromagnetic radiation (26) reflected by the reflection areas (20a-20e) of the detection layer (16);
**characterized in that** electromagnetic radiation (24) reflecting fibers (22) are arranged in the reflection areas (20a-20e) of the detection layer (16).

2. System (10) according to claim 1,
**characterized in that** fiber bundles with a plurality of electromagnetic radiation (24) reflecting fibers (22) are arranged in the reflection areas (20a-20e) and/or the electromagnetic radiation (24) reflecting fibers (22) form a plurality of spaced-apart electromagnetic radiation (24) reflecting detection strips.

3. System (10) according to claim 1 or 2,
**characterized in that** the detection layer (16) is designed as a geotextile (18) or comprises a geotextile (18), wherein the electromagnetic radiation (24) reflecting fibers (22) are fixed to the geotextile (18) and/or integrated into the geotextile (18).

4. System (10) according to claim 3,
**characterized in that** the geotextile (18) is designed as a woven fabric, knitted fabric or nonwoven fabric.

5. System (10) according to claim 3 or 4,
**characterized in that** the electromagnetic radiation (24) reflecting fibers (22) are fixed to a surface of the geotextile (18).

6. System (10) according to any one of claims 3 to 5,
**characterized in that** the electromagnetic radiation (24) reflecting fibers (22) are incorporated into the geotextile (18) by weaving, knitting, raschel, sewing or embroidering.

7. System (10) according to one of the preceding claims,
**characterized in that** the detection layer (16) is formed from a fiber composite material or comprises a fiber composite material, wherein the electromagnetic radiation (24) reflecting fibers (22) are fixed on the fiber composite material and/or integrated into the fiber composite material.

8. System (10) according to one of the preceding claims,
**characterized in that** the radiation reflecting fibers (22) are designed as carbon fibers.

9. System (10) according to one of the preceding claims,
**characterized in that** the detection layer (16) is designed as a reinforcement grid or is integrated into a reinforcement grid.

10. System (10) according to one of the preceding claims,
**characterized in that** the detection device (14) comprises an evaluation unit which is set up to determine the course (V), the thickness or an elongation that has occurred of a material layer (202, 202a, 202b) or a component (204a, 204b) of the structure (100) or its substructure (200) by evaluation of the emitted and received electromagnetic radiation (24, 26).

11. Substructure (200) for a traffic route, with
- a detection layer (16), which is arranged between two material layers (202, 202a, 202b) of the substructure (200) and has electromagnetic radiation (24) reflecting reflection areas (20a-20e);
**characterized in that** electromagnetic radiation (24) reflecting fibers (22) are arranged in the reflection areas (20a-20e) of the detection layer (16).

12. Method for detecting properties of a material layer (202, 202a, 202b) or an embedded component (204a, 204b) of a structure (100) or its substructure (200), by means of a system (10), in particular by means of a system (10) according to one of the preceding claims, comprising the steps of:
- emitting electromagnetic radiation (24) in the direction of a detection layer (16), which is embedded in a structure (100) or its substructure (200), by means of a detection device (14) of the system (10); and
- receiving the electromagnetic radiation (26) reflected by the detection layer (16) by means of the detection device (14);
**characterized in that** the electromagnetic radiation (24) emitted by the detection device (14) is reflected by electromagnetic radiation (24) reflecting fibers (22), which are arranged in reflection areas (20a-20e) of the detection layer (16).

13. Method according to claim 12,
**characterized by** one of the following steps:
- determining the course (V) and/or the position (Pa, Pb) of a material layer (202, 202a, 202b) or an embedded component (204a, 204b) of the structure (100) or its substructure (200) by evaluating the emitted and received electromagnetic radiation (24, 26) by means of an evaluation unit of the detection device (14);
- Determining the thickness of a material layer (202, 202a, 202b) or an embedded component (204a, 204b) of the structure (100) or its substructure by evaluating the emitted and received electromagnetic radiation (24, 26) by an evaluation unit of the detection device (14);
- Determining the elongation of a material layer (202, 202a, 202b) or an embedded component (204a, 204b) of the structure (100) or its substructure (200) by evaluating the emitted and received electromagnetic radiation (24, 26) by an evaluation unit of the detection device (14).

## Revendications

1. Système (10) de détection des propriétés d'une couche de matériau (202, 202a, 202b) ou d'une pièce encastrée (204a, 204b) d'un ouvrage de construction (100) ou de son soubassement (200) ; doté
- d'une couche de détection (16) qui présente des zones de réflexion (20a à 20e) de rayonnement électromagnétique (24) et qui est destinée à être encastrée dans un ouvrage (100) ou son soubassement (200) ; et
- un dispositif détecteur (14) destiné à émettre un rayonnement électromagnétique (24) en direction d'une couche de détection (16) et à recevoir un rayonnement électromagnétique (26) réfléchi par les zones de réflexion (20a à 20e) de la couche de détection (16) ;
**caractérisé en ce que** des fibres (22) réfléchissant le rayonnement électromagnétique (24) sont agencées dans les zones de réflexion (20a à 20e) de la couche de détection (16).

2. Système (10) selon la revendication 1,
**caractérisé en ce que** des faisceaux de fibres dotés d'une pluralité de fibres (22) réfléchissant le rayonnement électromagnétique (24) sont agencés dans les zones de réflexion (20a à 20e) et/ou que lesdites fibres (22) réfléchissant le rayonnement électromagnétique (24) forment plusieurs bandes de détection qui réfléchissent le rayonnement électromagnétique (24) et sont espacées les uns des autres.

3. Système (10) selon la revendication 1 ou 2,
**caractérisé en ce que** la couche de détection (16) est conçue sous forme de géotextile (18) ou comprend un géotextile (18), les fibres (22) réfléchissant le rayonnement électromagnétique (24) étant fixées sur le géotextile (18) et/ou intégrées dans ledit géotextile (18).

4. Système (10) selon la revendication 3,
**caractérisé en ce que** le géotextile (18) est conçu sous forme de tissu, de matière textile à mailles ou de voile non-tissé.

5. Système (10) selon la revendication 3 ou 4,
**caractérisé en ce que** les fibres (22) réfléchissant le rayonnement électromagnétique (24) sont fixées sur une surface du géotextile (18).

6. Système (10) selon l'une quelconque des revendications 3 à 5, **caractérisé en ce que** les fibres (22) réfléchissant le rayonnement électromagnétique (24) sont incorporées au géotextile (18) par tissage, maillage, maillage rachel, couture ou broderie.

7. Système (10) selon l'une quelconque des revendications précédentes, **caractérisé en ce que** la couche de détection (16) est conçue sous forme de matériau composite à fibres ou comprend un matériau composite à fibres, les fibres (22) réfléchissant le rayonnement électromagnétique (24) étant fixées sur le matériau composite à fibres et/ou intégrées dans ledit matériau composite à fibres.

8. Système (10) selon l'une quelconque des revendications précédentes, **caractérisé en ce que** les fibres (22) réfléchissant le rayonnement sont conçues sous forme de fibres en carbone.

9. Système (10) selon l'une quelconque des revendications précédentes, **caractérisé en ce que** la couche de détection (16) est conçue sous forme de treillis d'armature ou est intégrée dans un treillis d'armature.

10. Système (10) selon l'une quelconque des revendications précédentes, **caractérisé en ce que** le dispositif de détection (14) comprend une unité d'évaluation qui est destinée à déterminer, par évaluation du rayonnement électromagnétique (24, 26) émis et reçu, le tracé (V), l'épaisseur ou l'apparition d'une dilatation d'une couche de matériau (202, 202a, 202b) ou d'une pièce (204a, 204b) de l'ouvrage (100) ou de son soubassement (200).

11. Soubassement (200) d'une voie de circulation, doté
- d'une couche de détection (16) qui est agencée entre deux couches de matériau (202, 202a, 202b) du soubassement (200) et qui présente des zones de réflexion (20a à 20e) de rayonnement électromagnétique (24) ;
**caractérisé en ce que** des fibres (22) réfléchissant le rayonnement électromagnétique (24) sont agencées dans les zones de réflexion (20a à 20e) de la couche de détection (16).

12. Procédé de détection de propriétés d'une couche de matériau (202, 202a, 202b) ou d'une pièce incorporée (204a, 204b) d'un ouvrage de construction (100) ou de son soubassement (200) au moyen d'un système (10), notamment au moyen d'un système (10) selon l'une quelconque des revendications précédentes, comprenant les étapes :
- d'émission d'un rayonnement électromagnétique (24) en direction d'une couche de détection (16) qui est incorporée dans un ouvrage de construction (100) ou son soubassement (200), au moyen d'un dispositif de détection (14) du système (10) ; et
- de réception du rayonnement électromagnétique (26) réfléchi par la couche de détection (16), au moyen d'un dispositif de détection (14) ;
**caractérisé en ce que** le rayonnement électromagnétique (24) émis par le dispositif de détection (14) est réfléchi par des fibres (22) réfléchissant le rayonnement électromagnétique (24), lesquelles fibres sont agencées dans les zones de réflexion (20a- 20e) de la couche de détection (16).

13. Procédé selon la revendication 12,
**caractérisé par** une des étapes suivantes :
- déterminer le tracé (V) et/ou la position (Pa, Pb) d'une couche de matériau (202, 202a, 202b) ou d'une pièce encastrée (204a, 204b) de l'ouvrage de construction (100) ou de son soubassement (200) par évaluation du rayonnement électromagnétique (24, 26) émis et reçu, par l'intermédiaire d'une unité d'évaluation du dispositif de détection (14) ;
- déterminer l'épaisseur d'une couche de matériau (202, 202a, 202b) ou d'une pièce encastrée (204a, 204b) de l'ouvrage de construction (100) ou de son soubassement par évaluation du rayonnement électromagnétique (24, 26) émis et reçu, par l'intermédiaire d'une unité d'évaluation du dispositif de détection (14) ;
- déterminer la dilatation d'une couche de matériau (202, 202a, 202b) ou d'une pièce encastrée (204a, 204b) de l'ouvrage de construction (100) ou de son soubassement (200) par évaluation du rayonnement électromagnétique (24, 26) émis et reçu, par l'intermédiaire d'une unité d'évaluation du dispositif de détection (14).
